# EUROPÄISCHE PATENTANMELDUNG

(11) **EP 2 132 981 A1**
(43) Veröffentlichungstag der Anmeldung: **16.12.2009**
(21) Anmeldenummer: 09006852.9
(22) Anmeldetag: 20.05.2009
(51) Int. Cl.: A01J 25/15

(54) **Käsepresse**

(30) Priorität: 10.06.2008 DE 102008027556
(71) Anmelder: ALPMA Alpenland Maschinenbau GmbH, 83543 Rott am Inn (DE)
(72) Erfinder: Eitermoser, Franz, 83539 Pfaffing (DE); Dürmeier, Siegfried, 84556 Kastl (DE)
(74) Vertreter: Manitz, Finsterwald & Partner GbR

(57) **Zusammenfassung**

Die Erfindung betrifft eine Käsepresse mit an einem Gestell angeordneten Pressmitteln zum Pressen von mit Käsebruch gefüllten Käseformen, wobei die Pressmittel zum Ausüben einer horizontal gerichteten Presskraft auf einen horizontalen Formenstapel ausgebildet sind. Diese Käsepresse ist **dadurch gekennzeichnet, dass** das Gestell eine Mehrzahl von Stapelfächern aufweist, dass jedes der Stapelfächer in seinen beiden in horizontaler Richtung voneinander beabstandeten Endbereichen jeweils ein Druckelement aufweist, dass zumindest eines der beiden Druckelemente jedes Stapelfaches über ein Pressmittel in Richtung des anderen Druckelements beaufschlagbar ist, und dass ein Druckelement zwischen einer Befüllstellung und einer Pressstellung bewegbar ist, wobei es in der Befüllstellung eine Befüllöffnung des Stapelfachs zur Befüllung desselben mit einer Käseform oder einem Formenstapel freigibt.

## Beschreibung

Die Erfindung betrifft eine Käsepresse mit an einem Gestell angeordneten Pressmitteln zum Pressen von mit Käsebruch gefüllten Käseformen, wobei die Pressmittel zum Ausüben einer horizontal gerichteten Presskraft auf einen horizontalen Formenstapel ausgebildet sind.

Bei der Herstellung von Käse, insbesondere von Schnittkäse, wird eine Mischung von Käsebruch und Molke im Anschluss an die Fermentation und der als Synärese bezeichneten Aggregation und Kontraktion der Milchproteine gepresst, um den Molkegehalt in der Käsemasse weiter abzusenken. Im Rahmen der industriellen Käseherstellung wird die Mischung aus Käsebruch und Molke mittels einer Portioniermaschine in spezielle, perforierte Pressformen gefüllt, welche beim Pressvorgang ein Austreten der Molke ermöglichen, während die Käsemasse in der Pressform zurückgehalten wird, um daraus schließlich Käselaibe zu formen.

Aus dem Stand der Technik ist es bekannt, befüllte Pressformen in vertikaler Richtung mittels jeweils eines Pneumatikzylinders mit einem Druck zwischen beispielsweise 0,1 und 0,3 bar zu beaufschlagen, wobei ein solcher Pressvorgang z.B. bis zu 2 Stunden dauern kann.
Ebenso ist es beispielsweise aus der deutschen Patentanmeldung DE 10 2006 034 548.7 der Anmelderin bekannt, horizontale, aus einer Mehrzahl von nebeneinander angeordneten Käseformen gebildete Formenstapel zu erzeugen, deren Käseformen dann gemeinsam in horizontaler Richtung mit einer Presskraft beaufschlagt werden. Gegenüber der erwähnten vertikalen Anordnung wird durch ein horizontales Pressen der vertikale Platzbedarf einer Käsepresse stark reduziert. Weiterhin wird eine unerwünschte Pressung der Käseformen durch das Eigengewicht der übereinander gestapelten Käseformen vermieden, so dass sichergestellt ist, dass auf jede Käseform eines horizontalen Formenstapels der gleiche Pressdruck ausgeübt wird.

Eine Aufgabe der vorliegenden Erfindung ist darin zu sehen, eine mit horizontal wirkenden Presskräften arbeitende Käsepresse dahingehend zu verbessern, dass deren Konstruktion vereinfacht wird. Insbesondere soll das Befüllen der Käsepresse mit einzelnen Käseformen oder Formenstapeln schnell und kostengünstig durchführbar sein.

Diese Aufgabe wird gelöst durch eine Käsepresse gemäß Anspruch 1 und insbesondere dadurch, dass eine Käsepresse der eingangs genannten Art mit folgenden Merkmalen ausgestattet wird:
- Das Gestell der Käsepresse weist eine Mehrzahl von Stapelfächern auf.
- Jedes der Stapelfächer weist in seinen beiden in horizontaler Richtung voneinander beabstandeten Endbereichen jeweils ein Druckelement auf.
- Zumindest eines der beiden Druckelemente jedes Stapelfaches ist über ein Pressmittel in Richtung des anderen Druckelements beaufschlagbar.
- Ein Druckelement ist zwischen einer Befüllstellung und einer Pressstellung bewegbar, wobei es in der Befüllstellung eine Befüllöffnung des Stapelfachs zur Befüllung desselben mit einer Käseform oder einem Formelstapel freigibt.

Erfindungsgemäß wird das Gestell der Käsepresse also mit mehreren Stapelfächern ausgerüstet, welche jeweils eine Befüllöffnung aufweisen. Jeder Befüllöffnung ist dabei ein Druckelement zugeordnet, welches aus einer Pressstellung in eine Befüllstellung und umgekehrt bewegt werden kann. In der Befüllstellung gibt das genannte Druckelement die Befüllöffnung des jeweiligen Stapelfaches frei, so dass das Stapelfach mit einer Käseform oder mit einem Formenstapel befüllt werden kann. Nach Abschluss des Befüllvorgangs kann das Druckelement dann in seine Pressstellung bewegt werden, in welcher kein weiteres Befüllen des Stapelfachs mehr möglich ist, wobei ausgehend von dieser Pressstellung jedoch dann ein Pressvorgang ausgelöst werden kann.

Das Gestell der Käsepresse kann erfindungsgemäß regalähnlich mit einer Vorderseite und einer Rückseite ausgebildet werden, wobei sich die Stapelfächer jeweils zwischen der Vorderseite und der Rückseite einer solchen Regalanordnung erstrecken, so dass die Presskräfte innerhalb jedes Stapelfachs senkrecht zur Vorderseite bzw. Rückseite des Gestells wirken. An der Vorderseite des Gestells können dann die Befüllöffnungen der Stapelfächer angeordnet werden, so dass ein bequemes Befüllen, ausgehend von der Vorderseite des Gestells, erfolgen kann. Der Befüllvorgang kann dabei sowohl mittels eines Roboters als auch beispielsweise manuell bewerkstelligt werden.

Bevorzugt ist es, wenn jedes Stapelfach ein aktives und ein passives Druckelement aufweist. Das aktive Druckelement kann dann während des Pressvorgangs von einem Pressmittel beaufschlagt werden, wohingegen das passive Druckelement lediglich eine statische Gegendruckfläche bildet. Auf diese Weise wird erreicht, dass lediglich dem aktiven Druckelement ein Pressmittel zugeordnet werden muss, wobei das passive Druckelement einfacher und kostengünstiger ausgeführt werden kann, da diesem kein Pressmittel zugeordnet werden muss.

Besonders bevorzugt ist es bei Vorsehung eines aktiven und eines passiven Druckelements pro Stapelfach, wenn das passive Druckelement zwischen einer Befüllstellung und einer Pressstellung bewegbar ausgeführt wird. Da das pressmittelfreie passive Druckelement mechanisch einfacher ausgestaltet werden kann, als das pressmittelbeaufschlagte aktive Druckelement, ist es dementsprechend auch einfacher, das passive Druckelement derartig beweglich auszugestalten, dass es zwischen der Befüllstellung und der Pressstellung bewegt werden kann.

Es ist von Vorteil, wenn das passive Druckelement aus einer unteren Pressstellung nach oben in eine obere Befüllstellung bewegbar ist. Grundsätzlich kann die Bewegung des passiven Druckelements zwischen der Befüll- und der Pressstellung eine rotatorische und/oder eine translatorische Komponente aufweisen. Bevorzugt ist das passive Druckelement zwischen der Befüll- und der Pressstellung verschwenkbar, wobei dieses Verschwenken bevorzugt um eine einzige horizontale Schwenkachse erfolgt.

Besonders vorteilhaft ist es im Rahmen der Erfindung, wenn das passive Druckelement eine Angriffsfläche für einen Formenstapelgreifer aufweist, über welche es von diesem Formenstapelgreifer z.B. entgegen der Schwerkraft aus einer unteren Pressstellung nach oben in eine obere Befüllstellung bewegbar ist. In diesem Fall kann das passive Druckelement vollkommen ohne eigenen Antrieb ausgeführt werden, da es ausschließlich durch den Formenstapelgreifer nach oben in die Befüllstellung bewegt werden kann.

Sobald der Formenstapelgreifer vom passiven Druckelement wegbewegt wird, so dass kein Kontakt zwischen Formenstapelgreifer und Angriffsfläche des passiven Druckelements mehr besteht, fällt das passive Druckelement schwerkraftbeaufschlagt nach unten in die Pressstellung, wobei hier vorteilhafterweise am Gestell der Käsepresse für jedes passive Druckelement ein Anschlag vorgesehen wird, welcher die schwerkraftbeaufschlagte Bewegung des passiven Druckelements nach unten in die Pressstellung an einer definierten Position begrenzt, so dass die Pressstellung letztlich jeweils durch diesen Anschlag definiert wird.

Die mit der Erfindung erzielbaren Vorteile kommen also insbesondere dann zur Geltung, wenn die passiven Druckelemente über die Vorderseite des Gestells mittels Formenstapelgreifern ohne eigenen Antrieb nach oben in die Befüllstellung verschwenkbar sind und nach Entfernung der Formenstapelgreifer schwerkraftbeaufschlagt zurück nach unten in die Pressstellung fallen, da die passiven Druckelemente in diesem Fall mechanisch besonders einfach ausgeführt werden können.
Alternativ ist es im Rahmen der Erfindung jedoch ebenso möglich, die passiven Druckelemente mit einem eigenen Antrieb auszustatten, welcher sie zwischen der Befüllstellung und der Pressstellung bewegt. Diese Ausführungsform ist jedoch nur mit einem erhöhten wirtschaftlichen Aufwand bewerkstelligbar.

Bei der erläuterten vorteilhaften Ausführungsform der passiven Druckelemente ohne eigenen Antrieb, können diese bevorzugt die Form eines im Wesentlichen U-förmigen Bügels aufweisen, welcher sich in der Pressstellung im Wesentlichen in einer horizontalen Ebene erstreckt und welcher an den Enden seiner beiden Schenkel um eine horizontale Achse schwenkbar gelagert ist. Die Lagerstelle kann sich dabei im Bereich der aktiven Druckelemente, auf der Rückseite des Gestells befinden.

Im Rahmen der Erfindung kann jedem Stapelfach ein eigenes Pressmittel zugeordnet werden, welches insbesondere zur Bewegung des aktiven Druckelements des jeweiligen Stapelfachs in horizontaler Richtung ausgelegt ist. Das Pressemittel kann als Druckzylinder, insbesondere als Pneumatikzylinder ausgebildet werden. Derartige Pneumatikzylinder besitzen den Vorteil, dass sie über den gesamten Pressweg eine konstante Presskraft erzeugen. Dieser Vorteil ist beim alternativen Einsatz einer Gewindespindel anstelle eines Pneumatikzylinders nicht erzielbar, dennoch ist der Einsatz einer Gewindespindel oder anderer Pressmittel grundsätzlich möglich.

Besonders vorteilhaft ist es, wenn das Pressmittel auf der dem passiven Druckelement abgewandten Seite des Stapelfachs angeordnet ist. Dabei kann es insbesondere außerhalb des Stapelfachs gegenüber der Befüllöffnung an der Rückseite des Gestells angeordnet werden, so dass eine Wartung oder ein Austausch des Pressmittels problemlos von der Gestellrückseite aus möglich ist. Eine derart vorteilhafte Servicesituation ermöglicht beispielsweise die Wartung der Pressmittel auch während des Betriebs der Käsepresse.

Weitere bevorzugte Ausführungsformen sind in den Unteransprüchen sowie in der nachfolgenden Figurenbeschreibung erläutert. Die einzelnen im Rahmen der Figurenbeschreibung beschriebenen Merkmale können jeweils auch unabhängig voneinander im Rahmen der Erfindung zum Einsatz gelangen.

Die Erfindung wird nachfolgend anhand eines Ausführungsbeispiels unter Bezugnahme auf die Zeichnungen erläutert; in diesen zeigen:
- Fig. 1: eine dreidimensionale Vorderansicht einer erfindungsgemäßen Käsepresse,
- Fig. 2: eine dreidimensionale Rückansicht einer Käsepresse gemäß Fig. 1,
- Fig. 3 a - c: Ansichten des aktiven sowie des passiven Druckelements gemäß der Erfindung in unterschiedlichen Stellungen einschließlich eines erfindungsgemäß einsetz-baren Formenstapelgreifers,
- Fig. 4 a - c: einen erfindungsgemäß einsetzbaren Formenstapelgreifer in dreidimensionaler Ansicht in unterschiedlichen Stellungen, und
- Fig. 5: eine weitere dreidimensionale Vorderansicht einer erfindungsgemäßen Käsepresse.

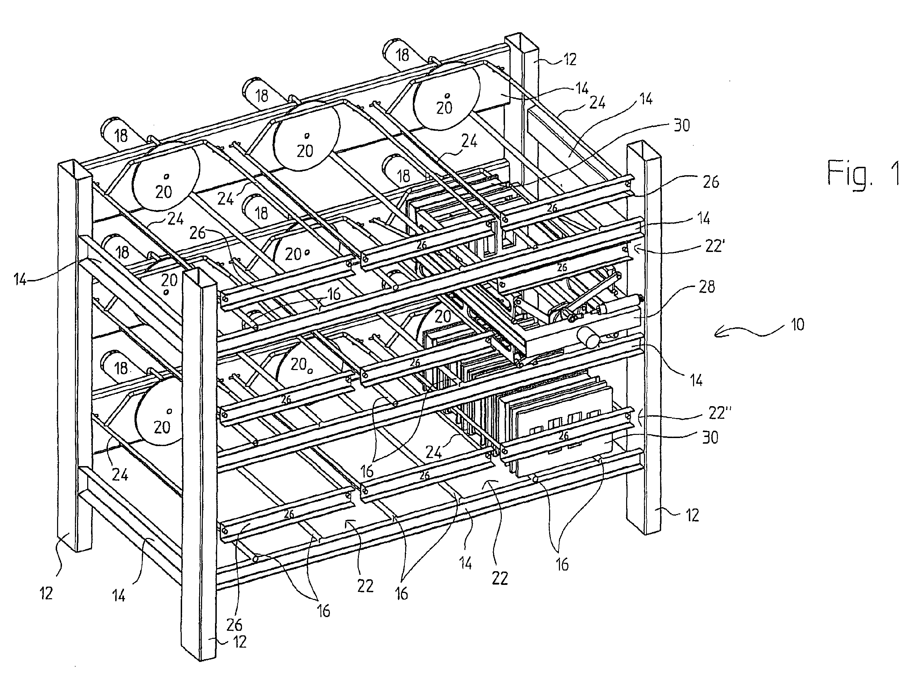

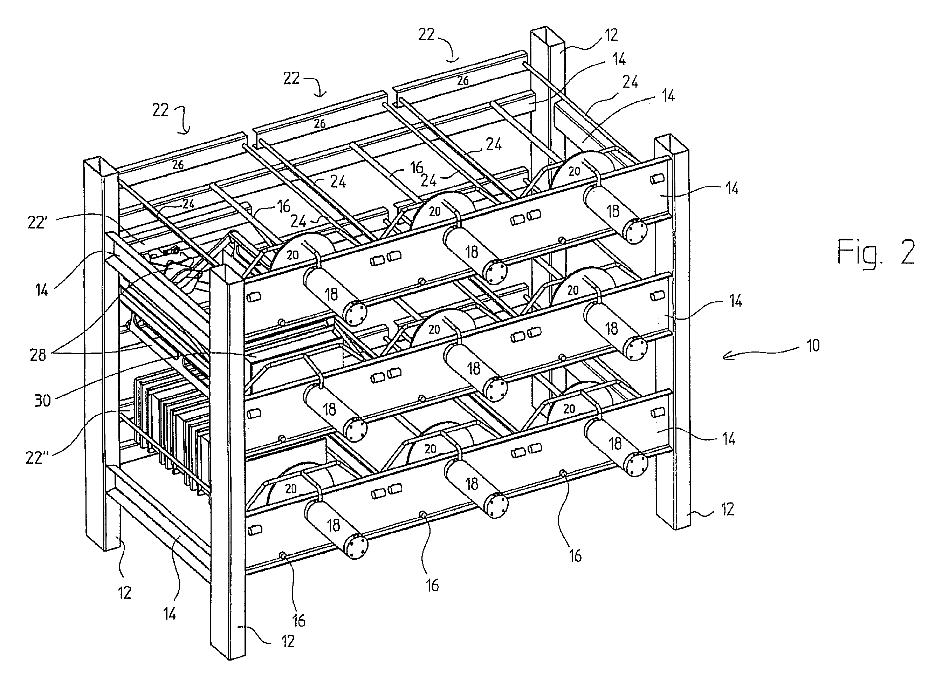

Die Fig. 1 und 2 zeigen ein regalartiges Gestell 10 mit vier Füßen 12, welche an allen vier Seiten des Gestells mittels Streben 14 fest miteinander verbunden sind, so dass sich insgesamt eine stabile quaderförmige Struktur des Gestells 10 ergibt.

Die sich parallel zur Vorderseite des Gestells 10 und parallel zur Rückseite des Gestells 10 erstreckenden Streben 14 sind jeweils in einer horizontalen Ebene mittels insgesamt sechs Rundstäben 16 miteinander verbunden, welche sich senkrecht zur Vorder- und Rückseite des Gestells erstrecken. Jeweils zwei nebeneinander liegende Rundstäbe 16 bilden dabei den Boden eines einzelnen Stapelfachs.

Das Gestell 10 gemäß den Fig. 1 und 2 besitzt insgesamt drei horizontale Ebenen, wobei jede dieser Ebenen drei Stapelfächer aufweist.

Die an der Rückseite des Gestells 10 befindlichen Streben 14 weisen in vertikaler Richtung eine größere Erstreckung auf als die restlichen Streben 14. An jeder der rückseitigen Streben 14 sind jeweils drei Pneumatikzylinder 18 derart befestigt, dass sie sich von der Rückseite des Gestells 10 nach außen erstrecken, so dass sie sich letztlich komplett außerhalb desjenigen Raums befinden, der durch die Füße 12 und die Streben 14 begrenzt wird. Hierdurch wird bezüglich der Pneumatikzylinder 18 die bereits erwähnte positive Servicesituation erreicht.

Als aktives Druckelement ist jedem Pneumatikzylinder 18 ein kreisförmiger Druckteller 20 zugeordnet, der sich auf der Innenseite des Gestells 10 parallel zu den rückseitigen Streben 14 erstreckt und dazu geeignet ist, über eine Betätigung der Pneumatikzylinder 18 in Richtung der Vorderseite des Gestells 10 bewegt zu werden.

Jedem Stapelfach gemäß den Fig. 1 und 2 ist ein passives Druckelement in Form eines U-förmigen Bügels 22 zugeordnet. Die beiden Schenkel der passiven Druckelemente 22 werden jeweils durch Rundstäbe 24 gebildet, die sich parallel zueinander erstrecken und an ihren im Bereich der Vorderseite des Gestells 10 gelegenen Enden mittels eines im Querschnitt U-förmigen Blechs 26 verbunden sind.

Die Rundstäbe 24 erstrecken sich parallel zu den seitlichen Streben 14 des Gestells, die Bleche 26 erstrecken sich parallel zu den vorder- und rückseitigen Streben 14 des Gestells 10.

An ihren den Blechen 26 abgewandten Enden sind die Rundstäbe 24 an den rückseitigen Streben 14 schwenkbar gelagert, so dass die passiven Druckelemente 22 in ihrer Gesamtheit um eine horizontale Achse nach oben geschwenkt werden können. Eine derart nach oben geschwenkte Stellung, die der erfindungsgemäßen Befüllstellung entspricht, ist in Fig. 1 bezüglich des rechten Stapelfachs der mittleren Ebene des Gestells 10 dargestellt. Das passive Druckelement dieses Stapelfachs ist mit 22' bezeichnet. Entsprechendes gilt für Fig. 2.

In der nach oben geschwenkten Befüllstellung des passiven Druckelements 22' kann das ihm zugeordnete Stapelfach mittels eines Formenstapelgreifers 28 mit Käseformen 30 befüllt werden. Der Formenstapelgreifer 28 ist dazu ausgelegt, eine, bevorzugt mehrere Käseformen 30 bei angehobenem passivem Druckelement 22' in ein Stapelfach von der Vorderseite des Gestells 10 her einzuführen und auf den Rundstäben 16, die dem jeweiligen Stapelfach zugeordnet sind, abzulegen. Anschließend wird der Formenstapelgreifer 28 wieder aus dem Regalfach herausbewegt, wobei er zuvor die im Stapelfach abgelegten Käseformen 30 freigegeben hat. Wenn der Formenstapelgreifer 28 vollständig aus dem Stapelfach herausgezogen wurde, fällt das passive Druckelement 22' schwerkraftbedingt wieder in seine Pressstellung zurück, so wie dies bezüglich des passiven Druckelements 22" in den Fig. 1 und 2 gezeigt ist. Das passive Druckelement 22" ist gemäß Fig. 1 dem rechten Stapelfach der untersten Ebene des Gestells 10 zugeordnet. Dieses Stapelfach ist vollständig mit einem aus mehreren Käseformen 30 bestehenden Formenstapel gefüllt, so dass die vorderste Käseform 30 am Blech 26 des passiven Druckelements 22" anliegt. Die hinterste Käseform 30 des genannten Formenstapels liegt am Druckteller 20 des Stapelfachs an, so dass bei Bewegung des Drucktellers 20 über den Pneumatikzylinder 18 in Richtung des Blechs 26 horizontale Druckkräfte auf die Käseformen 30 ausgeübt werden können.

Nachdem der Pressvorgang abgeschlossen ist, wird der jeweilige Pneumatikzylinder 18 druckfrei geschaltet, woraufhin ein Formenstapelgreifer 28 das passive Druckelement 22, 22', 22" anheben und den Formenstapel aus dem Gestell 10 herausbewegen kann.

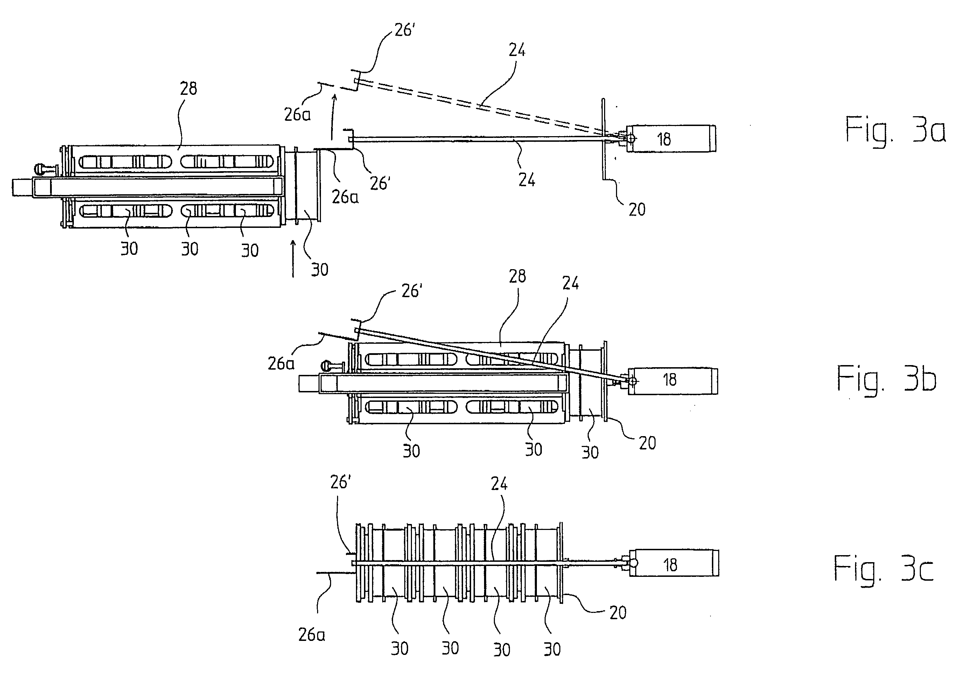

Die Fig. 3 a bis 3 c zeigen nochmals im Detail die Anordnung von Pneumatikzylinder 18, Druckteller 20, Käseformen 30 und passiven Druckelementen, welche aus den Rundstäben 24 und Blechen 26' bestehen. Die Bleche 26' sind gegenüber den Blechen 26 gemäß den Fig. 1 und 2 dahingehend modifiziert, dass der untere Schenkel 26a länger ausgebildet ist als der obere Schenkel.
Weiterhin ist in den Figuren 3a und 3b auch noch ein erfindungsgemäß einsetzbarer Formenstapelgreifer 28 in verschiedenen Positionen gezeigt.

Fig. 3 a veranschaulicht den Unterschied zwischen der erfindungsgemäßen Befüllstellung und der erfindungsgemäßen Pressstellung. Das untere passive Druckelement 24, 26' befindet sich in der Pressstellung, wohingegen sich das mit gestrichelten Linien gezeichnete nach oben geschwenkte passive Druckelement 24, 26' in seiner Befüllstellung befindet, in welcher ein Stapelfach in Pfeilrichtung mit Käseformen 30 befüllt werden kann. Aus Fig. 3 a ist ferner ersichtlich, dass das passive Druckelement 24, 26' um eine horizontale Achse 32 verschwenkbar ist, die sich in Fig. 3 a senkrecht zur Zeichenebene erstreckt.

Schließlich zeigt Fig. 3a auch einen Formenstapelgreifer 28, welcher vier Käseformen 30 in Form eines horizontal ausgerichteten Formenstapels hält. Dieser Formenstapelgreifer 28 kann beispielsweise an einem Roboterarm befestigt sein, so dass er in beliebiger Weise durch den Raum bewegbar ist.

Zur Bewegung des passiven Druckelements 24, 26' wird der Formenstapelgreifer 28 gemäß Fig. 3a von links derart an das Blech 26' heranbewegt, dass die vorne aus dem Formenstapelgreifer 28 hervorstehende Käseform 30 mit ihrem oberen Ende an der Unterseite des unteren Schenkels 26a des Blechs 26' zur Anlage kommt. Wenn dann in der Folge der Formenstapelgreifer in Pfeilrichtung nach oben bewegt wird, nimmt die nach vorne hervorstehende Käseform 30 den unteren Schenkel 26a des Blechs 26' mit und verschwenkt dadurch das passive Druckelement 24, 26' nach oben in seine in Fig. 3a gestrichelt dargestellte Position. Der von einem Roboterarm geführte Formenstapelgreifer 28 übernimmt somit das Öffnen des passiven Druckelements 24, 26'.

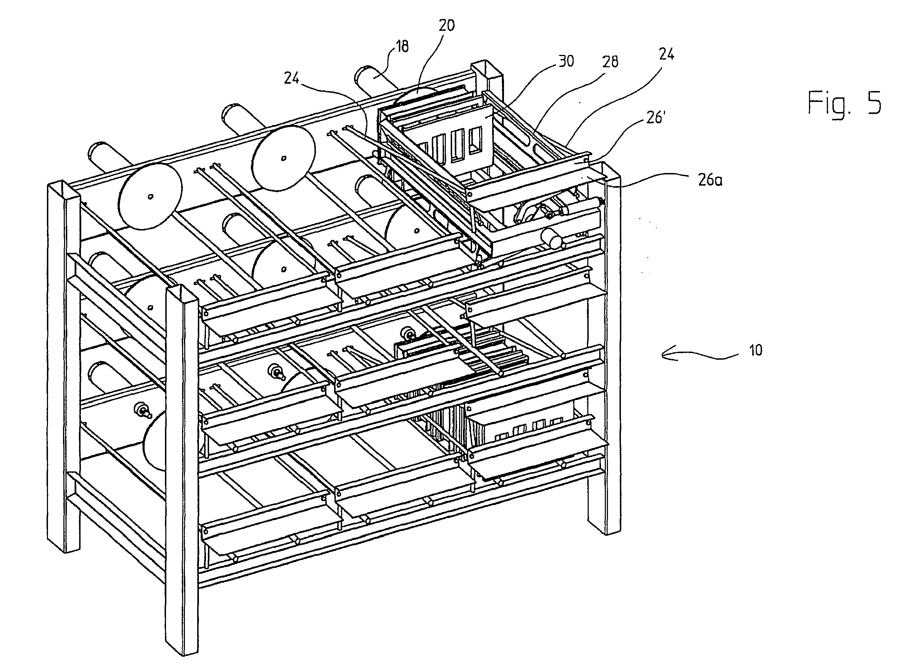

Nach diesem Öffnen wird der Formenstapelgreifer 28 mit den darin befindlichen Käseformen 30 in horizontaler Richtung zum Pneumatikzylinder 18 hinbewegt, wobei die Unterseite des Blechs 26 an der Oberseite des Formenstapelgreifers 28 entlang gleitet. Diese Bewegung wird so lange fortgesetzt, bis sich der Formenstapelgreifer 28 und die von ihm gehaltenen Käseformen in der in Fig. 3b gezeigten Position befinden. An dieser Position stößt die vorderste Käseform 30 am Druckteller 20 an.
Diese Position - allerdings nur mit einer Käseform 30 - ist auch beim Stapelfach rechts oben gemäß der dreidimensionalen Darstellung entsprechend Fig. 5 veranschaulicht.

Anschließend erfolgt dann ein Öffnen des Formenstapelgreifers, was zur Folge hat, dass die von ihm zuvor gehaltenen Käseformen 30 auf den Rundstäben 60 des jeweiligen Stapelfachs abgelegt werden. Nach diesem Ablegen wird der Formenstapelgreifer 28 wieder in horizontaler Richtung vom Pneumatikzylinder 18 wegbewegt, wobei auch hier wieder das Blech 26' an der Oberseite des Formenstapelgreifers 28 entlang gleitet. Wenn der Formenstapelgreifer 28 dann vollständig aus dem jeweiligen Stapelfach herausgezogen ist, befindet er sich auch nicht mehr in Kontakt mit dem Blech 26', was dann zur Folge hat, dass das passive Druckelement 24, 26' letztlich in seine Pressstellung nach unten fällt. In dieser, in Fig. 3c dargestellten Stellung erstrecken sich die Rundstäbe 24 in einer horizontalen Ebene. Zwischen dem Druckteller 20 und dem Blech 26' sind dann die vier, einen Formenstapel bildende Käseformen 30 angeordnet, die zuvor vom Formenstapelgreifer 28 freigegeben wurden.
Weiterhin ist gemäß Fig. 3c der Druckteller 20 vom Pneumatikzylinder 18 bereits soweit in Richtung des Blechs 26' bewegt worden, dass der Formenstapel links am Blech 26' und rechts am Druckteller 20 anliegt, so dass bei weiterer Beaufschlagung des Drucktellers 20 durch den Pneumatikzylinder 18 Druckkräfte auf den Formenstapel ausgeübt werden.

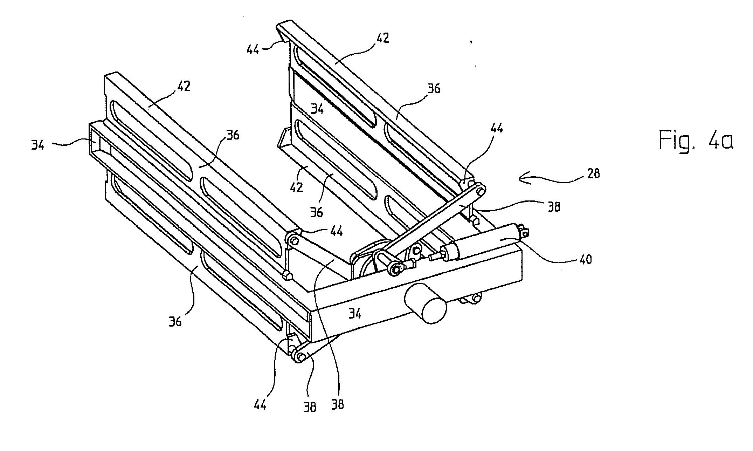

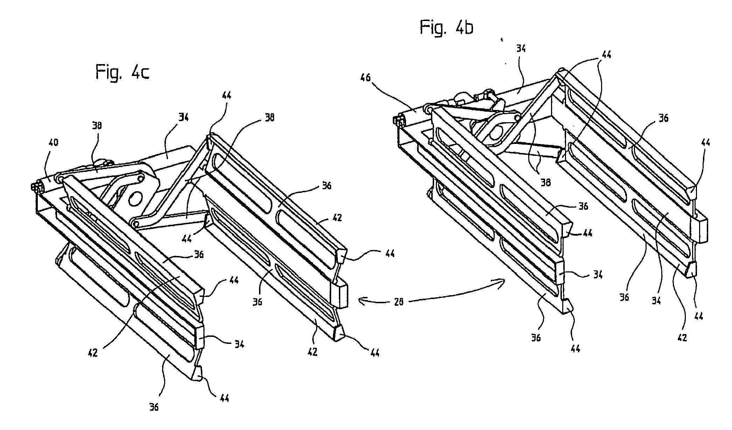

Die Fig. 4 a und 4 b zeigen in zwei unterschiedlichen Perspektivansichten einen erfindungsgemäß einsetzbaren Formenstapelgreifer 28 gemäß den Fig. 3 a und 3 b in seiner geschlossenen Stellung. Fig. 4 c zeigt diesen Formenstapelgreifer 28 in seiner geöffneten Stellung.

Ein Formenstapelgreifer 28 gemäß den Fig. 4 a bis c kann auch unabhängig von der Erfindung zum Handhaben von Käseformen oder zum Handhaben von Stapeln von Käseformen eingesetzt werden.

Der Formenstapelgreifer 28 besitzt einen starren, U-förmigen Rahmen 34, an dem gelenkig insgesamt vier Greifelemente 36 gelagert sind. Die Greifelemente 36 sind dabei jeweils um parallel zueinander verlaufende Achsen schwenkbar, wobei sich diese Achsen entlang der Ober- bzw. Unterseiten der Schenkel des U-förmigen Rahmens 34 erstrecken. Eine Schwenkbewegung der Greifelemente 36 um die genannten Achsen kann über ein Antriebsgestänge 38 und einen Antriebszylinder 40 bewerkstelligt werden. Die unterschiedlichen Schwenkstellungen der Greifelemente 36 sind in den Fig. 4 a, b einerseits (geschlossene Greifelemente 36) und 4 c andererseits (geöffnete Greifelemente 36) dargestellt.

Jedes der Greifelemente 36 besitzt eine Anschlagleiste 42, die sich in den Positionen gemäß den Fig. 4 a, b im Wesentlichen in einer horizontalen Ebene erstrecken und somit eine vertikale Bewegung von Käseformen 30 relativ zum U-förmigen Rahmen verhindern. Die Anschlagleisten 42 erstrecken sich dabei über die gesamte Länge der Greifelemente 36.

Weiterhin besitzen die Greifelemente 36 in den beiden Endbereichen der jeweils zugehörigen Anschlagleiste 42 jeweils einen Anschlagwinkel 44. Jeder dieser beiden, bei jeder Anschlagleiste 42 vorgesehenen Anschlagwinkel 44 erstreckt sich bei der in Fig. 4 a - c dargestellten Position in einer vertikalen Ebene. Diese Anschlagwinkel verhindern eine horizontale Bewegung von Käseformen relativ zum U-förmigen Rahmen 34.

Die Vorsehung von Anschlagleisten 42 und Anschlagwinkeln 44 ermöglicht es, dass Käseformen 30, die mittels eines Formenstapelgreifers 28 ergriffen wurden, mit diesem frei im Raum bewegt und insbesondere auch beliebig verkippt werden können, ohne dass sich die ergriffenen Käseformen relativ zum U-förmigen Rahmen 34 des Formenstapelgreifers 28 bewegen. Somit ist es insbesondere möglich, einen vertikal ausgerichteten Formenstapel zu ergreifen und diesen in eine horizontale Position zu bringen, in der er dann in ein Stapelfach einer erfindungsgemäßen Käsepresse bewegt werden kann.

Das erfindungsgemäße Gestell 10 wird bevorzugt mittels eines Roboters befüllt und entleert, welcher einen Formenstapelgreifer 28 gemäß den Fig. 4 a - c handhabt. Ein solcher Roboter ist bevorzugt deckenseitig gelagert, was in vorteilhafter Weise dazu führt, dass er im Gegensatz zu am Boden stehenden Robotern weniger stark durch Molke beschmutzt wird. Auch die Reinigung eines solchen Roboters lässt sich leichter bewerkstelligen, da der Bodenbereich frei begehbar ist.

Das Gestell 10 gemäß den Fig. 1 und 2 kann beispielsweise in Form von zwei Regalspuren aufgestellt werden, deren Vorderseiten einander zugewandt sind, so dass sie über einen gemeinsamen Roboter bedient werden können. Die Anzahl der Regale kann dabei der maximal benötigten Presszeit angepasst werden.

Auf der Vorderseite der Gestelle 10 werden bevorzugt Türen, insbesondere Schiebetüren vorgesehen, wobei immer nur diejenige Tür desjenigen Gestells 10 geöffnet wird, welches gerade vom Roboter bedient wird. Die genannten Türen werden benötigt, um sicherzustellen, dass Wartungspersonal während eines automatischen Reinigungsvorgangs nicht mit Reinigungsflüssigkeit angespritzt wird, dass Reinigungsflüssigkeit während eines automatischen Reinigungsvorgangs nicht verloren geht, so dass sie wieder verwendet werden kann, und dass der vor dem Gestell 10 befindliche Roboter nicht mit Reinigungsflüssigkeit bespritzt wird.

Wenn die Türen als Schiebetüren ausgebildet werden, können diese bevorzugt von dem gleichen Roboter geöffnet und geschlossen werden, welcher auch den Formenstapelgreifer 28 handhabt. In diesem Fall kann ein separater Antrieb der Türen eingespart werden.

### Bezugszeichenliste

- 10: Gestell
- 12: Füße
- 14: Streben
- 16: Rundstäbe
- 18: Pneumatikzylinder
- 20: Druckteller
- 22, 22', 22": passives Druckelement
- 24: Rundstäbe
- 26, 26': Blech
- 26a: unterer Schenkel des Blechs 26'
- 28: Formenstapelgreifer
- 30: Käseformen
- 32: Achse
- 34: U-förmiger Rahmen
- 36: Greifelemente
- 38: Antriebsgestänge
- 40: Antriebszylinder
- 42: Anschlagleiste
- 44: Anschlagwinkel

## Patentansprüche

1. Käsepresse mit an einem Gestell (10) angeordneten Pressmitteln (18) zum Pressen von mit Käsebruch gefüllten Käseformen (30), wobei die Pressmittel (18) zum Ausüben einer horizontal gerichteten Presskraft auf einen horizontalen Formenstapel ausgebildet sind,
**dadurch gekennzeichnet,**
**dass** das Gestell (10) eine Mehrzahl von Stapelfächern aufweist, dass jedes der Stapelfächer in seinen beiden in horizontaler Richtung voneinander beabstandeten Endbereichen jeweils ein Druckelement (20, 22) aufweist,
**dass** zumindest eines der beiden Druckelemente (20, 22) jedes Stapelfaches über ein Pressmittel (18) in Richtung des anderen Druckelements beaufschlagbar ist, und
**dass** ein Druckelement (22) zwischen einer Befüllstellung und einer Pressstellung bewegbar ist, wobei es in der Befüllstellung eine Befüllöffnung des Stapelfachs zur Befüllung desselben mit einer Käseform (30) oder einem Formenstapel freigibt.

2. Käsepresse nach Anspruch 1,
**dadurch gekennzeichnet,**
**dass** jedes Stapelfach ein aktives und ein passives Druckelement (20, 22) aufweist.

3. Käsepresse nach Anspruch 2,
**dadurch gekennzeichnet,**
**dass** während des Pressvorgangs das aktive Druckelement (20) vom Pressmittel (18) beaufschlagbar ist und das passive Druckelement (22) eine statische Gegendruckfläche (26) bildet.

4. Käsepresse nach einem der Ansprüche 2 oder 3,
**dadurch gekennzeichnet,**
**dass** das passive Druckelement (22) zwischen einer Befüllstellung und einer Pressstellung bewegbar ist.

5. Käsepresse nach Anspruch 4,
**dadurch gekennzeichnet,**
**dass** das passive Druckelement (22) aus einer unteren Pressstellung nach oben in eine obere Befüllstellung bewegbar ist.

6. Käsepresse nach einem der Ansprüche 2 bis 5,
**dadurch gekennzeichnet,**
**dass** die Bewegung des passiven Druckelements (22) zwischen der Befüll- und der Pressstellung eine rotatorische und/oder eine translatorische Komponente aufweist.

7. Käsepresse nach Anspruch 6,
**dadurch gekennzeichnet,**
**dass** das passive Druckelement (22) zwischen der Befüll- und der Pressstellung verschwenkbar ist.

8. Käsepresse nach einem der Ansprüche 2 bis 7,
**dadurch gekennzeichnet,**
**dass** das passive Druckelement (22) eine Angriffsfläche für einen Formenstapelgreifer (28) aufweist, über welche es vom Formenstapelgreifer (28) entgegen der Schwerkraft aus der Pressstellung in die Befüllstellung bewegbar ist.

9. Käsepresse nach Anspruch 8,
**dadurch gekennzeichnet,**
**dass** das passive Druckelement (22) schwerkraftbeaufschlagt frei in die Pressstellung bewegbar ist.

10. Käsepresse nach einem der Ansprüche 2 bis 9,
**dadurch gekennzeichnet,**
**dass** das passive Druckelement (22) im Wesentlichen die Form eines U-förmigen Bügels aufweist.

11. Käsepresse nach einem der vorhergehenden Ansprüche,
**dadurch gekennzeichnet,**
**dass** jedem Stapelfach ein eigenes Pressmittel (18) zugeordnet ist, welches insbesondere zur Bewegung des aktiven Druckelements (20) des jeweiligen Stapelfaches in horizontaler Richtung ausgelegt ist.

12. Käsepresse nach Anspruch 11,
**dadurch gekennzeichnet,**
**dass** das Pressmittel (18) als Druckzylinder, insbesondere als Pneumatikzylinder, ausgebildet ist.

13. Käsepresse nach einem der vorhergehenden Ansprüche,
**dadurch gekennzeichnet,**
**dass** das Pressmittel (18) auf der dem passiven Druckelement (22) abgewandeten Seite des Stapelfaches angeordnet ist.

14. Käsepresse nach einem der vorhergehenden Ansprüche,
**dadurch gekennzeichnet,**
**dass** das Pressmittel (18) außerhalb des Stapelfaches gegenüber der Befüllöffnung an dessen Rückseite angeordnet ist.
